# EUROPEAN PATENT SPECIFICATION

(11) **EP 3 392 385 B1**
(45) Date of publication and mention of the grant of the patent: **28.06.2023**
(21) Application number: 18167081.1
(22) Date of filing: 12.04.2018
(51) Int. Cl.: D04B 15/14

(54) **METHOD FOR MANUFACTURING A NEEDLE WALLS ASSEMBLY OF CIRCULAR KNITTING MACHINE**
VERFAHREN ZUR HERSTELLUNG VON NADELWÄNDEN EINER RUNDSTRICKMASCHINE
PROCÉDÉ DE FABRICATION D'UN ENSEMBLE DE PAROIS D'AIGUILLE DE MACHINE À TRICOTER CIRCULAIRE

(30) Priority: 14.04.2017 TW 106112673
(43) Date of publication of application: 24.10.2018
(73) Proprietor: Hou, Ku-Ching, New Taipei City 24257 (TW)
(72) Inventor: Hou, Ku-Ching, New Taipei City 24257 (TW)
(74) Representative: Zeitler Volpert Kandlbinder Patentanwälte Partnerschaft mbB

(56) References cited:
- WO-A1-2015/104618
- DE-B- 1 171 105
- US-A- 1 850 817
- US-A- 3 817 058

## Description

### Background of the Invention

### 1. Technical Field

The invention relates to circular knitting machines, particularly to the manufacture of a needle walls assembly of a circular knitting machine.

### 2. Related Art

Circular knitting machines are equipment for mass-producing knitted fabric. A currently existing circular knitting machine, especially for a fine needle knitting machine with much more needles, has a needle bed (cylinder/dial/sinker ring) with needle guiding slots which has a large amount and tiny width, so the slots are hard to be formed and processed. Usually, roughly finished products have problems of insufficient accuracy, surface roughness or wear resistance because of subsequent processing (post-processing).

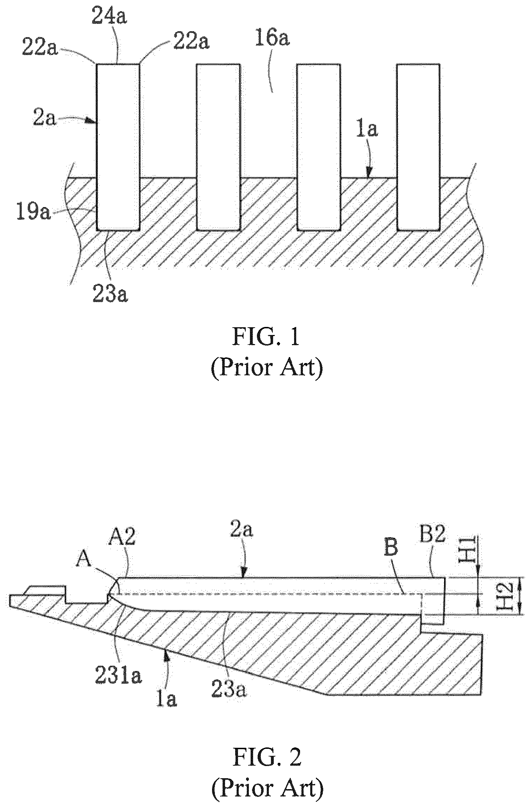

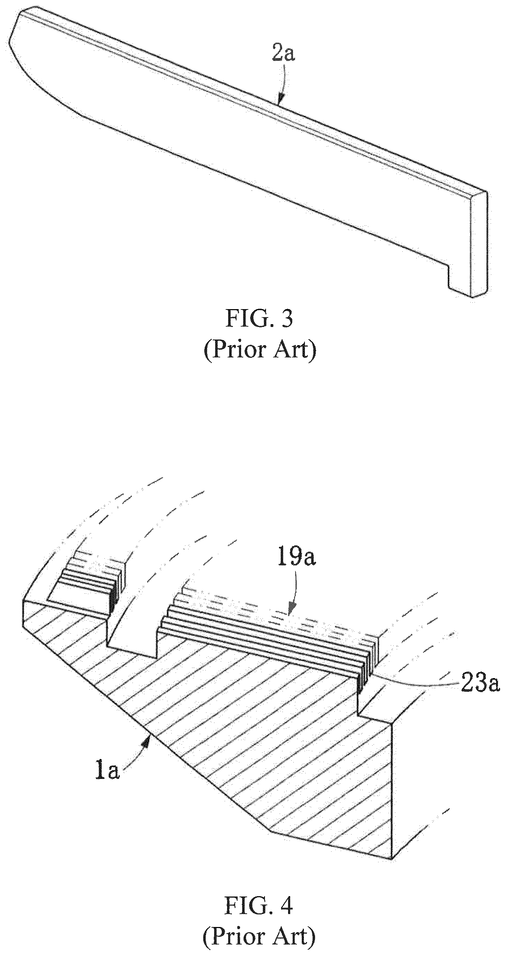

Please refer to FIGS. 1-4. A typically conventional manufacturing method of needle walls assembly of a circular knitting machine machines a needle bed body 1a to form a required shape first. Then the needle bed body 1a is cut to form a plurality of slots 19a. A channel 16a over the needle bed body 1a is formed between two adjacent slots 19a. The bottom of the slot 19a serves as a joint datum plane 23a. Finally, the insertion sheets 2a are separately inserted into the slots 19a one by one.

The needle bed body 1a associated with the inserting sheets 2a is known as a needle wall.

However, the bottoms of the slots 19a are always deformed by the heat treatment. Even if the insertion sheets 2a are inserted very carefully, their non-grinding accuracy and an external size still greatly exceeds a required range of standard tolerance. As a result, the conventional post-processing is to grind a plate such as an insertion sheet 2a to become a sheet with required accuracy and an external size and then use a polisher to perform deburring and/or polishing and sandblast grinding processes. Its target is to improve surface smoothness of the needle wall so as to reduce friction of actions of knitting needles.

However, two sides of the insertion sheet 2a is ground, so round corners of the insertion sheet 2a become right-angled ones 22a. This will make the knitting needles worn down when the knitting machine operates. When its burrs are not completely removed, the high-speed acting components such as knitting needles and sinker plates may raise problems of needle tension, needle jam or damage of needle wall. Such interference of components will cause not only quality reduction such as yarn forking, fracture or fluffing but also fast wearing down of components, or even malfunction of whole machine. The conventional post-processing is time-consuming and laborious, especially for removal of burrs.

In detail, after the needle bed body 1a has been processed with heat treatment, the lathing tolerance of parallelism from point A to point B will be enlarged from original about 0.01mm to 0.1mm or even above 0.35mm because of heat treatment errors and inconsistence of thickness specification of the needle bed body 1a. As a result, the bottom of the slot 10a is also deformed by the milling process. Further, there is a combination tolerance of the height H2 and the corresponding portion 231a of the insertion sheet 2a. Thus, when the needle walls have been assembled by the conventional method, the parallelism from point A2 to point B2 of the insertion sheet 2a also becomes 0.15mm or even above 0.5mm. This exceeds the specification standard (below 0.03mm) very much. As a result, the conventional method reserves a deflection gradient between point A and point B during the lathing process so as to reduce interference of heat treatment and keep the parallelism between point A and point B to meet the specification standard after the heat treatment. After assembling is finished, grind the top of the needle wall to make both the section between point A2 and point B2 and the section between point A and point B be a synchronization tolerance and to keep the height H1 of the slot to meet the specification standard.
WO 2015/104618 A1 discloses a needle cylinder for a circular knitting machine for knitwear or hosiery, comprising a cylinder body provided with an external surface and with a plurality of vertical slots made in the external surface, wherein the plurality of slots realize a corresponding plurality of seatings.
US 3 817 058 A describes a cylinder and dial construction for knitting machines. Spaces and passageways are formed behind the knitting elements in cylinder constructions associated with circular knitting machines.
DE 11 71 105 B discloses cylinders, sinker rings or dial discs of circular knitting machines used to guide the needles during knitting.
US 1 850 817 A relates to cylinders for circular knitting machines, and more particularly to the walls of the needle cylinder.

### Summary of the Invention

An object of the invention is to provide a method for manufacturing a needle walls assembly of a circular knitting machine, which can eliminate the machining processes such as grinding of precision and dimensions, deburring and polishing, etc. In addition, it can also reduce the resistance abrasion between needle walls and the knitting needles. The serve lifespan of the knitting needles and the needle walls can be lengthened, and the machine knitting speed can be increased so as to improve the productivity.

To accomplish the above object, the invention provides a method for manufacturing needle walls assembly of circular knitting machine, which includes the steps of:
a) providing a needle bed body and insertion sheets, wherein the needle bed body is provided with slots, the needle bed body is introduced with a heat treatment deformation coefficient to keep a first datum plane for knitting needles and a second datum plane for needle walls, bottoms of the slots are milled to exceed a range of the heat treatment deformation, each of the insertion sheets has a first portion at a front end thereof, a second portion at a rear end thereof and a third portion between the first portion and the second portion, the first portion and the second portion correspond to the first datum plane and the second datum plane, respectively, and a non-grinding accuracy and an external size of the first portion and the second portion of each insertion sheet are controlled within a tolerance range;
b) measuring sizes of the inserting sheets and the bottoms of the slots;
c) milling each slot when the size of the bottom of the slot measured in step b) is below a first standard, so that a gap is formed between the third portion of the insertion sheet and the bottom of the slot to prevent the third portions from touching the bottoms of the slots;
d) after heat treatment, measuring sizes of the first datum plane and second datum plane;
e) machining the first datum plane and second datum plane when the sizes measured in step d) do not meet a second standard; and
f) inserting the insertion sheets into the slots one by one with making the first portion and the second portion closely attached on the first datum plane and second datum plane, respectively.

### Brief Description of the Drawings

FIG. 1 is a cross-sectional view of a conventional needle walls assembly;
FIG. 2 is another cross-sectional view of the conventional needle walls assembly;
FIG. 3 is a perspective view of a conventional insertion sheet of the conventional needle walls assembly;
FIG. 4 is a perspective view of the conventional needle walls assembly;
FIG. 5 is a is a cross-sectional view of the needle walls assembly of the invention;
FIG. 6 is another cross-sectional view of the needle walls assembly of the invention;
FIG. 7 is a perspective view of a conventional insertion sheet of the invention; and
FIG. 8 is a perspective view of the needle walls assembly of the invention.

### Detailed Description of the Invention

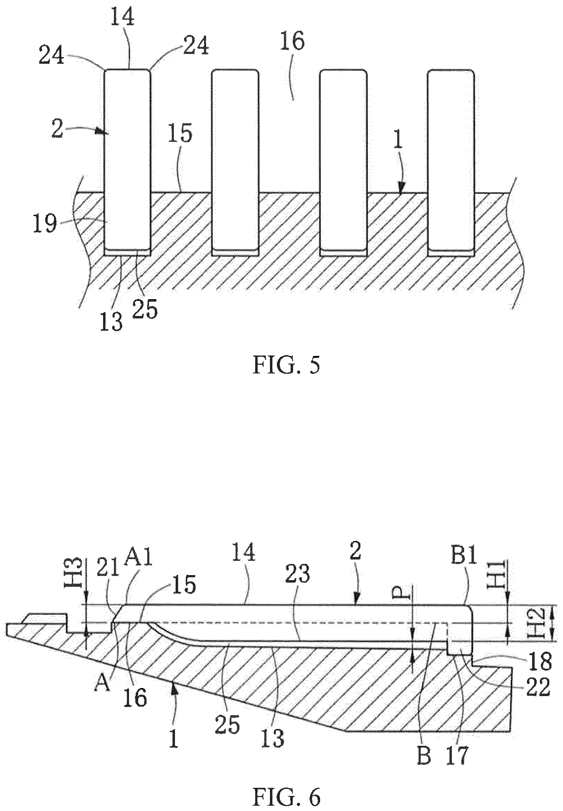

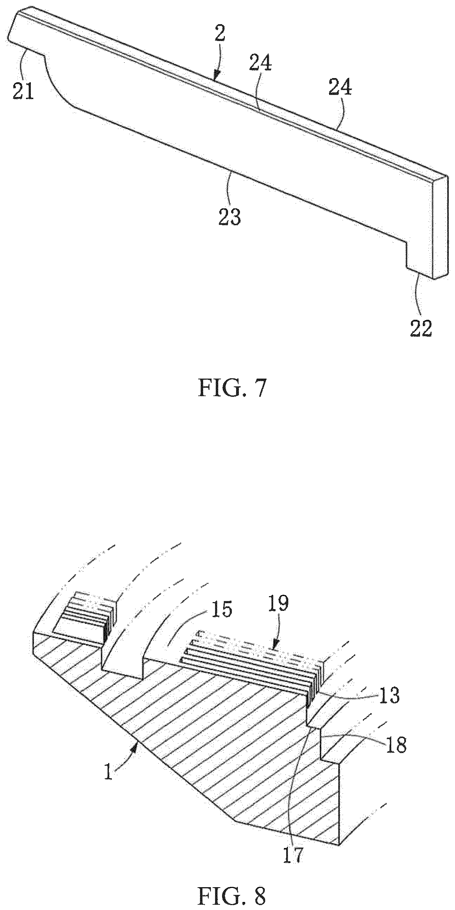

Please refer to FIGS. 5-8. The invention provides a method for manufacturing needle walls assembly of circular knitting machine, which includes the steps as follows.

First, provide a needle bed body 1 and insertion sheets 2. The needle bed body 1 is provided with slots 19 at predetermined positions at regular intervals and a channel 16 is formed between two adjacent slots 19. The needle bed body 1 is introduced with a heat treatment deformation coefficient to reserve a correctable size range of a first datum plane 15 for knitting needles and a second datum plane 17 for needle walls. That is, the second datum plane 17 may be disposed on a platform 18 of the needle bed body 1. The platform 18 protrudes from the needle bed body 1 to form a step shape.

The bottom 13 of the slot 19 is milled to exceed a range of the heat treatment deformation coefficient to guarantee a first portion 21 of the insertion sheet 2 corresponding to the first datum plane 15 and a second portion 22 of the insertion sheet 2 corresponding to the second datum plane 17 to be able to firmly be attached on the first datum plane 15 and the second datum plane 17, respectively.

Grinding accuracy and an external size is introduced into design and manufacture of the insertion sheet 2. The insertion sheet 2 is formed by punch machining. The insertion sheet 2 has a first portion 21 at an end (front end) thereof, a second portion 22 at another end (rear end) thereof and a third portion 23 between the first portion 21 and the second portion 22. The bottoms of the first portion 21 and the second portion 22 may be flat planes or curved surfaces. The bottom of the second portion 22 is lower than the bottom of the first portion 21 in level height. The bottom of the third portion 23 may be a flat plane or curved surface. The first portion 21 and the second portion 22 correspond to the first datum plane 15 and the second datum plane 17, respectively. It should be noted that the first portion 21 and the second portion 22 and non-grinding accuracy and an external size 14 of the insertion sheet 2 have to be controlled within a tolerance range.

Next, measure sizes of the inserting sheet 2 and the bottom 13 of the slot 19 (the first slot). Mill the bottom 13 of the first slot 19 when needed and mill the other slots 19 according to the specification to guarantee the third portion 13 of the insertion sheet 2 not to touch the bottom 13 of the slot 19. That is, the first portion 21 and the second portion 22 being firmly attached on the first datum plane 15 and the second datum plane 17 respectively can be confirmed again.

After heat treatment, measure sizes of the first datum plane 15 and second datum plane 17 and machine the first datum plane 15 and second datum plane 17 when needed. That is, selectively machining according to requirements is performed to make it be within an accurate tolerance range. As a result, an accurate non-grinding accuracy and an external size 14 can be obtained.

Next, insert the insertion sheets 2 into the slots 19 one by one with making the first portion 21 and the second portion 22 closely attached on the first datum plane 15 and second datum plane 17, respectively. The third portion 23 of the insertion sheet 2 does not touch the bottom 13 of the slot 19 so as to form a gap 25 between the third portion 23 and the slot bottom 13. Preferably, a width of the gap 25 is above 0.1mm.

After assembling, measure non-grinding accuracy and the external size 14. They have to be controlled within an accurate tolerance range with keeping two top angles of the insertion sheet 2 to be round angles 24.

As shown in FIG. 6, section between points A and B is a datum plane of excluding deformation interference of the invention. Because section between point B and the second datum plane 17 is a dropping step, its step height will not be affected by heat deformation. As a result, the second datum plane 17 is a datum plane of excluding deformation interference of the invention. In addition, height H3 of the first portion 21 of the insertion sheet 2 is fixed when forming. When the parallelism between points A and B has been confirmed within the specification standard after heat treatment and assembling has been finished, the parallelism between points A1 and B1 and section between points A and B will become a synchronization tolerance, and slot heights of the section between points A and A1 and the section between points B and B1 can also be confirmed to meet the specification standard.

While this invention has been described by way of examples and in terms of preferred embodiments, it is to be understood that this invention is not limited hereto, and that various changes, substitutions, and alterations can be made herein without departing from the scope of this invention as defined by the appended claims.

## Claims

1. A method for manufacturing a needle walls assembly of a circular knitting machine comprising:
a) providing a needle bed body (1) and insertion sheets (2), wherein the needle bed body (1) is provided with slots (19), the needle bed body (1) is introduced with a heat treatment deformation coefficient to keep a first datum plane (15) for knitting needles and a second datum plane (17) for needle walls, bottoms (13) of the slots (19) are milled to exceed a range of the heat treatment deformation, each of the insertion sheets (2) has a first portion (21) at a front end thereof, a second portion (22) at a rear end thereof and a third portion (23) between the first portion (21) and the second portion (22), the first portion (21) and the second portion (22) correspond to the first datum plane (15) and the second datum plane (17), respectively, and a non-grinding accuracy and an external size of the first portion (21) and the second portion (22) of each insertion sheet (2) are controlled within a tolerance range;
b) measuring sizes of the inserting sheets (2) and the bottoms (13) of the slots (19);
c) milling each slot (19) when the size of the bottom (13) of the slot (19) measured in step b) is below a first standard, so that a gap (25) is formed between the third portion (23) of the insertion sheet (2) and the bottom (13) of the slot (19) to prevent the third portions (23) from touching the bottoms (13) of the slots (19);
d) after heat treatment, measuring sizes of the first datum plane (15) and second datum plane (17);
e) machining the first datum plane (15) and second datum plane (17) when the sizes measured in step d) do not meet a second standard; and
f) inserting the insertion sheets (2) into the slots (19) one by one with making the first portion (21) and the second portion (22) closely attached on the first datum plane (15) and second datum plane (17), respectively.

2. The method of claim 1, wherein the second datum plane (17) is disposed on a platform (18) of the needle bed body (1), and the platform (18) protrudes from the needle bed body (1) to form a step shape.

3. The method of claim 1 or 2, wherein a width of the gap (25) is above 0.1mm.

4. The method of one of claims 1 to 3, wherein a bottom of the second portion (22) is lower than a bottom of the first portion (21) in level height.

5. The method of claim 4, wherein the bottoms of the first and second portions (21, 22) are flat planes.

6. The method of one of the foregoing claims, wherein the insertion sheet (2) is formed by punch machining.

7. The method of one of the foregoing claims, wherein two top corners of the insertion sheet (2) are round angles (24) after assembling has been finished.

## Patentansprüche

1. Verfahren zur Herstellung einer Nadelwandanordnung einer Rundstrickmaschine, das folgendes aufweist:
a) Bereitstellen eines Nadelbettkörpers (1) und Einschubblechen (2), wobei der Nadelbettkörper (1) mit Schlitzen (19) versehen ist, wobei der Nadelbettkörper (1) mit einem Wärmebehandlungs-Verformungskoeffizienten versehen ist, um eine erste Bezugsebene (15) für Stricknadeln und eine zweite Bezugsebene (17) für Nadelwände auszubilden, wobei Böden (13) der Schlitze (19) gefräst sind, um einen Bereich der Wärmebehandlungs-Verformung zu überragen, wobei jedes der Einschubbleche (2) einen ersten Abschnitt (21) an einem vorderen Ende davon, einen zweiten Abschnitt (22) an einem hinteren Ende davon und einen dritten Abschnitt (23) zwischen dem ersten Abschnitt (21) und dem zweiten Abschnitt (22) aufweist, wobei der erste Abschnitt (21) und der zweite Abschnitt (22) der ersten Bezugsebene (15) bzw. der zweiten Bezugsebene (17) entsprechen, und eine Nichtschleifgenauigkeit und eine Außengröße des ersten Abschnitts (21) und des zweiten Abschnitts (22) jedes Einschubblechs (2) innerhalb eines Toleranzbereichs gesteuert werden;
b) Messen der Größen der Einschubbleche (2) und der Böden (13) der Schlitze (19);
c) Fräsen jedes Schlitzes (19), wenn die in Schritt b) gemessene Größe des Bodens (13) des Schlitzes (19) unter einem ersten Richtmaß liegt, so dass ein Spalt (25) zwischen dem dritten Abschnitt (23) des Einschubblechs (2) und dem Boden (13) des Schlitzes (19) ausgebildet wird, um zu verhindern, dass die dritten Abschnitte (23) die Böden (13) der Schlitze (19) berühren;
d) Messen der Größen der ersten Bezugsebene (15) und der zweiten Bezugsebene (17) nach der Wärmebehandlung;
e) Bearbeiten der ersten Bezugsebene (15) und der zweiten Bezugsebene (17), wenn die in Schritt d) gemessenen Größen ein zweites Richtmaß nicht erfüllen; und
f) Einschieben der Einschubbleche (2) in die Schlitze (19), eines nach dem anderen, wobei der erste Abschnitt (21) und der zweite Abschnitt (22) eng an der ersten Bezugsebene (15) bzw. der zweiten Bezugsebene (17) angebracht werden.

2. Verfahren nach Anspruch 1, wobei die zweite Bezugsebene (17) auf einer Plattform (18) des Nadelbettkörpers (1) angeordnet ist und die Plattform (18) sich vom Nadelbettkörper (1) erhebt, um eine Stufenform auszubilden.

3. Verfahren nach Anspruch 1 oder 2, wobei die Breite des Spalts (25) über 0,1 mm liegt.

4. Verfahren nach einem der Ansprüche 1 bis 3, wobei ein Boden des zweiten Abschnitts (22) in der Höhe niedriger ist als ein Boden des ersten Abschnitts (21).

5. Verfahren nach Anspruch 4, wobei die Unterseiten des ersten und zweiten Abschnitts (21, 22) ebene Flächen sind.

6. Verfahren nach einem der vorangehenden Ansprüche, wobei das Einschubblech (2) durch Stanzbearbeitung ausgebildet wird.

7. Verfahren nach einem der vorhergehenden Ansprüche, wobei zwei obere Ecken des Einschubblechs (2) nach erfolgtem Zusammenbau runde Winkel (24) sind.

## Revendications

1. Procédé de fabrication d'un assemblage de parois d'aiguille d'un métier à tricoter circulaire, comprenant les étapes consistant à :
a) fournir un corps de lit d'aiguilles (1) et des feuilles d'insertion (2), dans lequel le corps de lit d'aiguilles (1) est pourvu de fentes (19), le corps de lit d'aiguilles (1) est introduit avec un coefficient de déformation due au traitement thermique pour maintenir un premier plan de référence (15) pour les aiguilles à tricoter et un deuxième plan de référence (17) pour les parois d'aiguille, les fonds (13) des fentes (19) sont fraisés pour dépasser une plage de déformation due au traitement thermique, chacune des feuilles d'insertion (2) présente une première partie (21) à son extrémité avant, une deuxième partie (22) à son extrémité arrière et une troisième partie (23) entre la première partie (21) et la deuxième partie (22), la première partie (21) et la deuxième partie (22) correspondent respectivement au premier plan de référence (15) et au deuxième plan de référence (17), et une précision de non-rectification et une dimension externe de la première partie (21) et de la deuxième partie (22) de chaque feuille d'insertion (2) sont commandées à l'intérieur d'une plage de tolérance ;
b) mesurer les dimensions des feuilles d'insertion (2) et des fonds (13) des fentes (19) ;
c) fraiser chaque fente (19) lorsque la dimension du fond (13) de la fente (19) mesurée à l'étape b) est inférieure à une première norme, de sorte qu'un espace (25) soit formé entre la troisième partie (23) de la feuille d'insertion (2) et le fond (13) de la fente (19) pour empêcher les troisièmes parties (23) de toucher les fonds (13) des fentes (19) ;
d) après le traitement thermique, mesurer les dimensions du premier plan de référence (15) et du deuxième plan de référence (17) ;
e) usiner le premier plan de référence (15) et le deuxième plan de référence (17) lorsque les dimensions mesurées à l'étape d) ne répondent pas à une deuxième norme ; et
f) insérer les feuilles d'insertion (2) dans les fentes (19) une à une en faisant en sorte que la première partie (21) et la deuxième partie (22) soient étroitement fixées respectivement sur le premier plan de référence (15) et le deuxième plan de référence (17).

2. Procédé selon la revendication 1, dans lequel le deuxième plan de référence (17) est disposé sur une plate-forme (18) du corps de lit d'aiguilles (1) et la plate-forme (18) dépasse du corps de lit d'aiguilles (1) pour former une forme étagée.

3. Procédé selon la revendication 1 ou 2, dans lequel la largeur de l'espace (25) est supérieure à 0,1 mm.

4. Procédé selon l'une des revendications 1 à 3, dans lequel le fond de la deuxième partie (22) est plus bas que le fond de la première partie (21) en hauteur.

5. Procédé selon la revendication 4, dans lequel les fonds de la première et de la deuxième partie (21, 22) sont des plans plats.

6. Procédé selon l'une des revendications précédentes, dans lequel la feuille d'insertion (2) est formée par usinage au poinçon.

7. Procédé selon l'une des revendications précédentes, dans lequel les deux coins supérieurs de la feuille d'insertion (2) sont des angles arrondis (24) une fois l'assemblage terminé.
